# EUROPEAN PATENT APPLICATION

(11) **EP 2 420 984 A1**
(43) Date of publication of application: **22.02.2012**
(21) Application number: 10764508.7
(22) Date of filing: 15.04.2010
(51) Int. Cl.: G08G 1/123, G06Q 50/00, G08G 1/13, H04M 1/00, H04M 11/00, H04W 4/02, H04W 4/04, H04W 64/00

(54) **TAXI USER EXTRACTION DEVICE, TAXI USER EXTRACTION METHOD, TRANSPORTATION USER EXTRACTION DEVICE, AND TRANSPORTATION USER EXTRACTION METHOD**

(30) Priority: 17.04.2009 JP 2009100887
(71) Applicant: NTT DOCOMO, INC., Chiyoda-ku Tokyo 100-6150 (JP)
(72) Inventor: OYABU Yuki, Tokyo 100-6150 (JP); OKAJIMA Ichiro, Tokyo 100-6150 (JP); KAWAKAMI Hiroshi, Tokyo 100-6150 (JP); SUZUKI Toshihiro, Tokyo 100-6150 (JP); NAGATA Tomohiro, Tokyo 100-6150 (JP); JO Manhee, Tokyo 100-6150 (JP); OCHI Daisuke, Tokyo 100-6150 (JP); KOBAYASHI Motonari, Tokyo 100-6150 (JP)
(74) Representative: Viering, Jentschura & Partner
(86) International application number: PCT/JP2010/056771
(87) International publication number: WO 2010/119926

(57) **Abstract**

In a taxi user extraction device 10, an automobile movement extraction unit 12 creates line data of each user, using point data transmitted from mobile terminals 1, which is stored in a user location information storage unit 11, and probe data acquired by a probe information acquisition unit 13, and extracts first line data indicative of movement by automobile from the data. A taxi movement extraction unit 14 extracts second line data, based on the probe data. A taxi use extraction unit 15 extracts data agreeing with the second line data out of the first line data and stores the extracted data as third line data. A taxi using user extraction unit 16 extracts an identifier of mobile terminal 1 having formed the third line data.

## Description

### Technical Field

The present invention relates to a taxi user extraction device, a taxi user extraction method, a transportation user extraction device, and a transportation user extraction method.

### Background Art

In recent years, with the widespread use of mobile terminals, there are a variety of services provided by collecting and storing location information from mobile terminals carried by users and making use of these pieces of information. There are disclosed technologies of analyzing a movement locus or a transportation device of a user by making use of the location information that can be collected from the mobile terminal carried by the user.

For example, Patent Literature 1 and Patent Literature 2 disclose methods of estimating a transportation device of a user from user's movement locus, moving speed, and location information of railroad lines and roads.

### Citation List

### Patent Literatures

Patent Literature 1: Japanese Patent Application Laid-open No. 2008-283256
Patent Literature 2: Japanese Patent Application Laid-open No.

### Summary of Invention

### Technical Problem

However, the methods of estimating the transportation device as disclosed in Patent Literatures 1 and 2 above allow only estimation of user's movement by foot, by automobile, or by train. For this reason, it was infeasible to create data such as a distributed situation of people (taxi users) relatively frequently using a taxis, which is necessary for taxi companies or the like to plan efficient allocation of cars.

An aspect of the present invention, in view of the aforementioned circumstances, is directed to an object to provide a taxi user extraction device and a taxi user extraction method capable of extracting a user making use of a taxi, using information transmitted from mobile terminals carried by users.

It is also necessary to elaborate some means for extracting a user making use of a specific transportation device, for example, including movement by taxi, bus, or the like.

An aspect of the present invention, in view of the above-described circumstances, is directed to an object to provide a transportation user extraction device and a transportation user extraction method capable of extracting a user making use of a specific transportation device, using information transmitted from mobile terminals carried by users.

### Solution to Problem

In order to solve the above problem, a taxi user extraction device according to the present invention is a taxi user extraction device for extracting a user making use of a taxi, using information transmitted from a plurality of mobile terminals, comprising: user location information storage means which stores user location information containing location, time, and identifier of the mobile terminal transmitted from the mobile terminal; automobile movement extraction means which extracts locus of movement in which the user moved by automobile, based on moving speeds calculated from the location and time stored in the user location information storage means; probe information acquisition means which acquires probe information containing location, time, and empty running states transmitted from the taxi; taxi movement extraction means which extracts a locus of the taxi in which the taxi moved in a wage running state, based on the probe information acquired by the probe information acquisition means; taxi use extraction means which compares the movement locus of the taxis in the wage running state extracted by the taxi movement extraction means, with the automobile movement locus extracted by the automobile movement extraction means and extracts the automobile movement locus agreeing with the taxi movement locus in the wage running state; and taxi using user extraction means which extracts identifier of the mobile terminal having formed taxi use locus extracted by the taxi use extraction means.

A taxi user extraction method according to the present invention is a taxi user extraction method for extracting a user making use of a taxi, using information transmitted from a plurality of mobile terminals, comprising: a user location information storage step of storing user location information containing location, time, and identifier of the mobile terminal transmitted from the mobile terminal; an automobile movement extraction step of extracting locus of movement by automobile, based on moving speeds calculated from the location and time stored in the user location information storage step; a probe information acquisition step of acquiring probe information containing location, time, and empty running states transmitted from the taxi; a taxi movement extraction step of extracting a locus of the taxi in which the taxi moved in a wage running state, based on the probe information acquired in the probe information acquisition step; a taxi use extraction step of comparing the movement locus of the taxis in the wage running state extracted in the taxi movement extraction step, with the automobile movement locus extracted in the automobile movement extraction step and extracting the automobile movement locus agreeing with the taxi movement locus in the wage running state; and a taxi using user extraction step of extracting identifier of the mobile terminal having formed taxi use locus extracted in the taxi use extraction step. The wage running state stated herein refers to a state in which the taxi is running with a passenger or passengers.

The taxi user extraction device and the taxi user extraction method as described above use the user location information containing the locations, times, and identifiers of the mobile terminals transmitted from the plurality of mobile terminals, which is stored in the user location information storage means, and the probe information containing the locations, times, and empty running states transmitted from the taxi. The automobile extraction means creates a population of loci for each user and extracts the automobile movement locus indicative of movement by automobile from the population. The taxi movement extraction means extracts the movement locus of the taxi in the wage running state from the probe information. The taxi use extraction means extracts the automobile movement locus agreeing with the movement locus of the taxi in the wage running state, as a taxi use locus. The taxi using user extraction means extracts the identifier of the mobile terminal having formed the taxi use locus. This allows the taxi user extraction device and the taxi user extraction method to specify the user having used the taxi.

Since the taxi user extraction device and taxi user extraction method of the present invention extract the taxi use locus by matching with the probe information being actual taxi operation information, they can accurately extract the user making use of the taxi.

The taxi user extraction device of the present invention may be configured as follows: the taxi use extraction means determines that the automobile movement locus agrees with the taxi movement locus in the wage running state, if the times at a starting point and an ending point of the taxi movement locus in the wage running state and the times at a starting point and an ending point of the automobile movement locus are each in a predetermined time and if a distance is calculated between the taxi movement locus in the wage running state and the automobile movement locus to be not more than a predetermined value. This configuration allows the device to readily determine whether the two loci agree with each other.

In order to solve the above problem, a transportation user extraction device according to the present invention is a transportation user extraction device for extracting a user making use of a specific transportation device, using information transmitted from a plurality of mobile terminals, comprising: user location information storage means which stores user location information containing location, time, and identifier of the mobile terminal transmitted from the mobile terminal; user movement locus acquisition means which acquires user movement locus as locus of movement of the user, based on the user location information stored in the user location information storage means; transportation location information acquisition means which acquires transportation location information containing location, time, and an identifier of the transportation device transmitted from the transportation device; transportation movement locus acquisition means which acquires a transportation movement locus as a locus of movement of the transportation device, based on the transportation location information acquired by the transportation location information acquisition means; transportation use extraction means which compares the user movement locus acquired by the user movement locus acquisition means, with the transportation movement locus acquired by the transportation movement locus acquisition means and extracts the user movement locus agreeing with the transportation movement locus; and user extraction means which extracts identifier of the mobile terminal having formed the user movement locus extracted by the transportation use extraction means.

A transportation user extraction method according to the present invention is a transportation user extraction method for extracting a user making use of a specific transportation device, using information transmitted from a plurality of mobile terminals, comprising: a user location information storage step of storing user location information containing location, time, and identifier of the mobile terminal transmitted from the mobile terminal; a user movement locus acquisition step of acquiring user movement locus as locus of movement of the user, based on the user location information stored in the user location information storage step; a transportation location information acquisition step of acquiring transportation location information containing location, time, and an identifier of the transportation device transmitted from the transportation device; a transportation movement locus acquisition step of acquiring a transportation movement locus as a locus of movement of the transportation device, based on the transportation location information acquired in the transportation location information acquisition step; a transportation use extraction step of comparing the user movement locus acquired in the user movement locus acquisition step, with the transportation movement locus acquired in the transportation movement locus acquisition step and extracting the user movement locus agreeing with the transportation movement locus; and a user extraction step of extracting identifier of the mobile terminal having formed the user movement locus extracted in the transportation use extraction step.

According to the invention as described above, the user movement locus information is acquired based on the user location information stored in the user location information storage means and the transportation movement locus information is acquired based on the transportation location information transmitted from each transportation device. Then the device extracts the locus indicated by the user movement locus information agreeing with the movement locus indicated by the transportation movement locus information and extracts the identifier of the mobile terminal included in the user movement locus information of the extracted locus. Since this achieves association between the movement locus by transportation and the user's movement locus, it becomes feasible to extract a user making use of a specific transportation device. The transportation location information transmitted from the transportation device refers to information transmitted from a positioning system mounted on the transportation device, a mobile terminal carried by a driver or the like of the transportation device, and so on.

The transportation user extraction device of the present invention may be configured as follows: the user movement locus acquisition means specifies the transportation device used by the user, based on a moving speed calculated from the location and the time stored in the user location information storage means. This permits the device to estimate the transportation device used by the user, based on the speed.

The transportation user extraction device of the present invention may be configured as follows: the transportation location information acquisition means further acquires information about presence/absence of passenger on the transportation device as the transportation location information, and the transportation movement locus acquisition means acquires only the transportation movement locus of the transportation device with the information about the presence/absence of passenger corresponding to the presence. This configuration makes it feasible to omit, for example, a process of acquiring the transportation movement locus indicative of a movement locus of a bus in an empty running state, which does not have to be performed to check whether it agrees with the user movement locus. Since this leads to reduction in load on a processing device for executing the acquisition process of transportation movement locus, it becomes feasible to increase speed of other necessary extraction processing.

The transportation user extraction device of the present invention may be configured as follows: the transportation use extraction means determines that the user movement locus agrees with the transportation movement locus, if the times at a starting point and an ending point of the user movement locus and the times at a starting point and an ending point of the transportation movement locus are each within a predetermined time and if a distance is calculated between the user movement locus and the transportation movement locus to be not more than a predetermined value. This permits the device to readily and accurately determine whether the two movement loci agree with each other.

### Advantageous Effects of Invention

An aspect of the present invention enables the extraction of the user using the taxi, using the information transmitted from the mobile terminals carried by users.

Another aspect of the present invention enables the extraction of the user using the specific transportation device, using the information transmitted from the mobile terminals carried by users.

### Brief Description of Drawings

Fig. 1 is a block diagram showing a functional configuration of a taxi user extraction system including a taxi user extraction device according to the first embodiment.
Fig. 2 is a drawing showing a hardware configuration of the taxi user extraction device shown in Fig. 1.
Fig. 3A is a drawing showing an example of a table configuration of point data.
Fig. 3B is a drawing showing an example of a table configuration of line data.
Fig. 4 is a drawing showing an example of a table configuration of first line data.
Fig. 5A is a drawing showing an example of a table configuration of probe data.
Fig. 5B is a drawing showing an example of a table configuration of second line data.
Fig. 6 is a drawing showing an example of a table configuration of third line data.
Fig. 7 is a drawing to illustrate agreement of loci.
Fig. 8 is a drawing to illustrate agreement of loci.
Fig. 9 is a flowchart showing operation in the taxi user extraction device shown in Fig. 1.
Fig. 10 is a flowchart showing operation in the taxi user extraction device shown in Fig. 1.
Fig. 11 is a block diagram showing a functional configuration of a transportation extraction system including a transportation user extraction device according to the second embodiment.
Fig. 12A is a drawing showing an example of a table configuration of user point data.
Fig. 12B is a drawing showing an example of a table configuration of eleventh line data.
Fig. 13A is a drawing showing an example of a table configuration of transportation point data.
Fig. 13B is a drawing showing an example of a table configuration of processed transportation point data.
Fig. 13C is a drawing showing an example of a table configuration of twelfth line data.
Fig. 14 is a drawing to illustrate agreement of loci.
Fig. 15 is a drawing to illustrate agreement of loci.
Fig. 16 is a drawing showing an example of a table configuration of thirteenth line data.
Fig. 17 is a flowchart showing operation in the transportation user extraction device shown in Fig. 11.
Fig. 18 is a drawing showing an example of a table configuration of transportation point data according to a modification example of the second embodiment.
Fig. 19 is a drawing showing an example of a table configuration of eleventh line data according to a modification example of the second embodiment.

### Description of Embodiments

### (First Embodiment)

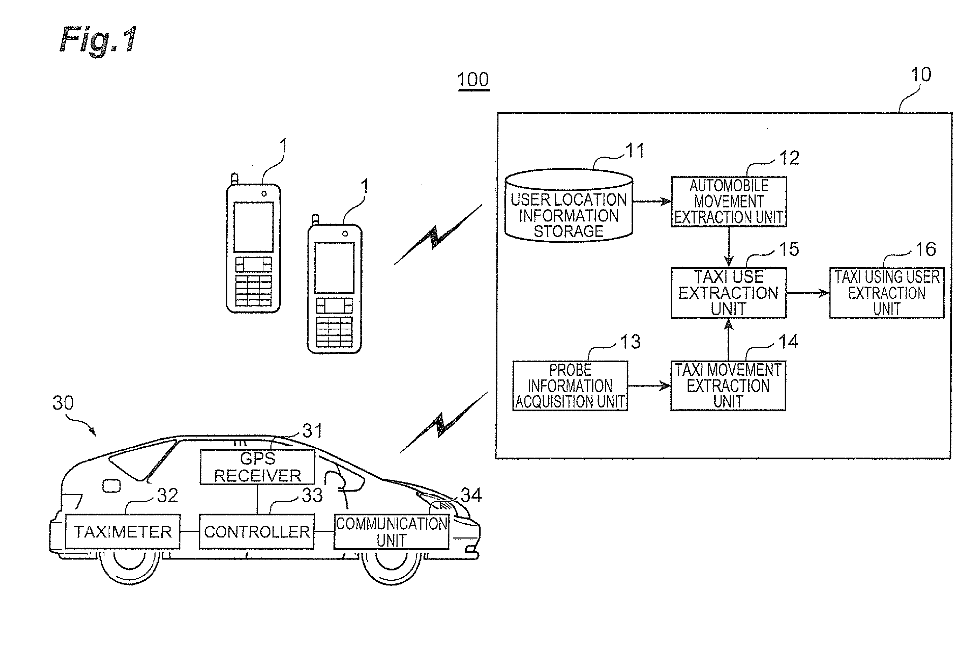

A taxi user extraction system 100 including a taxi user extraction device 10 according to a preferred embodiment of the present invention will be described using Figs. 1 to 10. In the description of the drawings, the same elements will be denoted by the same reference signs, without redundant description.

Fig. 1 is a block diagram showing a configuration of the taxi user extraction system 100 including the taxi user extraction device 10 according to an embodiment of the present invention.

The taxi user extraction system 100 is a system that extracts a taxi user from users having mobile terminals 1, using user location information mainly containing locations, times, and identifiers of the mobile terminals 1 transmitted at constant intervals from the mobile terminals 1, and probe data (probe information) mainly containing times, locations, and wage running states transmitted at constant intervals from taxi 30. The mobile terminals 1 and the taxi user extraction device 10 are connected in a data communicable state through a communication network NW composed of a mobile communication network, the Internet, an intranet, and so on. The taxi 30 and the taxi user extraction device 10 are connected in a communicable state, for example, through a wireless link or the like. The user location information transmitted from the mobile terminals 1 is not limited only to the transmission at constant intervals, but may also be transmitted in response to a request from a server. Likewise, the probe data transmitted from the taxi 30 is not limited to the transmission at constant intervals, either, but may also be transmitted in response to a request from a server.

The taxi user extraction device 10 performs the extraction of taxi user from the users having the mobile terminals 1, using the above-described user location information and the above-described probe data. The taxi user extraction device 10 is configured, as shown in Fig. 1, including a user location information storage unit (user location information storage means) 11, an automobile movement extraction unit (automobile movement extraction means or user movement locus acquisition means) 12, a probe information acquisition unit (probe information acquisition means or transportation location information acquisition means) 13, a taxi movement extraction unit (taxi movement extraction means or transportation movement locus acquisition means) 14, a taxi use extraction unit (taxi use extraction means or transportation use extraction means) 15, and a taxi using user extraction unit (taxi using user extraction means or user extraction means) 16.

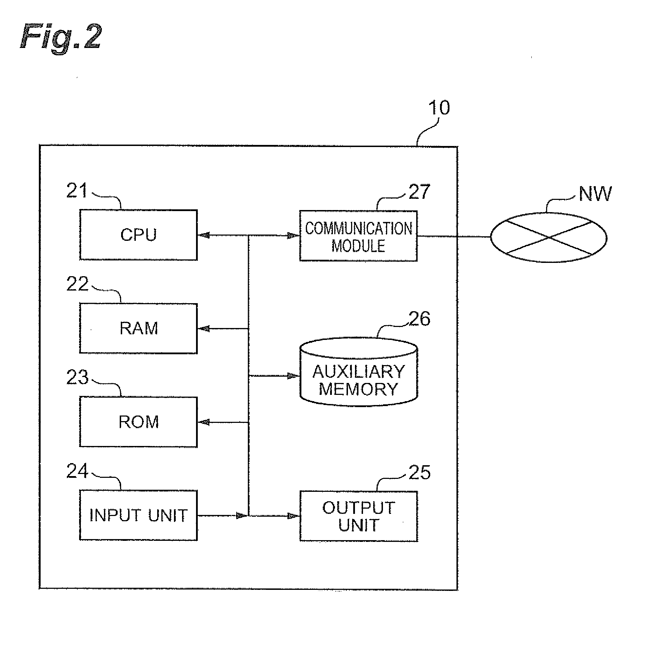

Fig. 2 is a hardware configuration diagram of the taxi user extraction device 10. In this manner, the taxi user extraction device 10 is physically configured, as shown in the same drawing, as an information processing device including CPU 21, RAM 22 and ROM 23 as main memories, input unit 24 such as input keys and a microphone as input devices, output unit 25 such as a speaker and a display, auxiliary memory 26 such as a hard disk drive or a memory card, communication module 27 to perform transmission/reception of data with NW, and so on. The functions implemented by the taxi user extraction device 10 are realized in such a manner that predetermined programs are retrieved onto the hardware such as CPU 21 and RAM 22 shown in Fig. 2, thereby to let the communication module 27, input unit 24, and output unit 25 operate under control of the CPU 21 and data is read out from and written into the RAM 22 and the auxiliary memory 26.

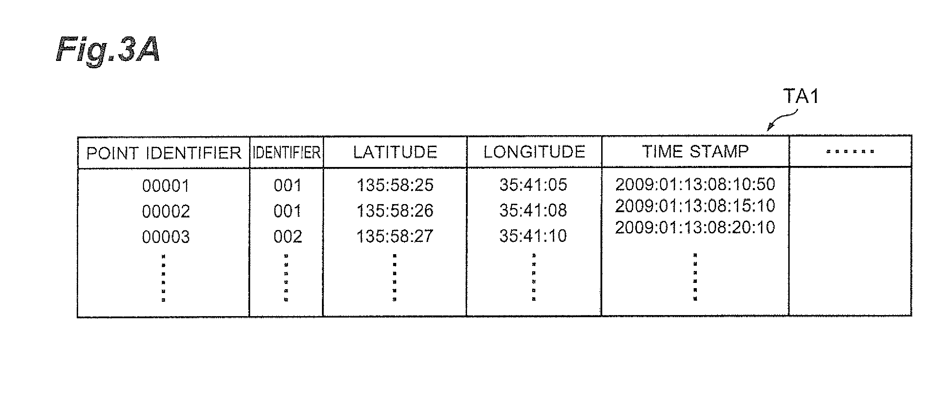

The below will describe the functions of the taxi user extraction device 10. The user location information storage unit 11 shown in Fig. 1 is a part that stores the user location information mainly containing times, locations, and identifiers of mobile terminals 1 transmitted at constant intervals from mobile terminals 1. The user location information storage unit 11 always saves the user location information transmitted from a plurality of mobile terminals, for a fixed period of time. The user location information storage unit 11 stores the user location information according to a point data table TA1 formed mainly including items named point identifier, identifier, latitude (location), longitude (location), and time stamp (time), for example, as shown in Fig. 3A. The point identifier stated herein refers to an ID of each piece of user location information and the identifier to an ID given to each mobile terminal 1.

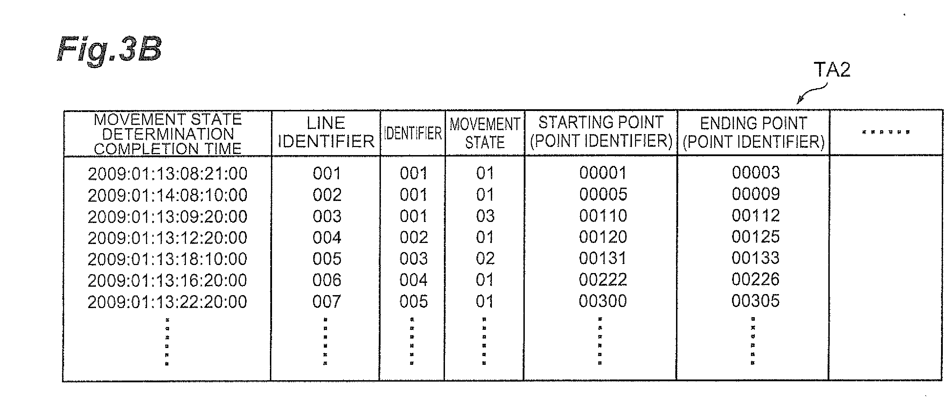

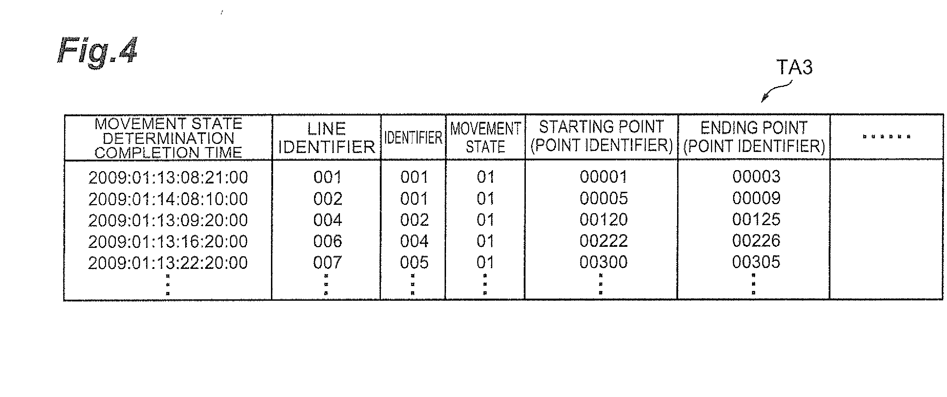

The automobile movement extraction unit 12 shown in Fig. 1 extracts first line data (automobile movement locus) indicative of a locus of a user having moved by means of an automobile, based on moving speeds calculated from information such as the latitudes, longitudes, and time stamps stored in the user location information storage unit 11. Specifically, the automobile movement extraction unit 12 arranges point identifiers (locations) contained in the user location information, in chronological order for each user and connects those points by straight lines to create the first line data. At this time, a speed between points is calculated from time stamps contained in the user location information, to calculate a moving speed. Then the unit determines whether the movement was done by foot or by bicycle, based on the moving speed. Then the unit compares the locus with train routes or bus routes to determine whether the movement was done by bus or by train. When the movement is determined not to correspond to movement by any of foot, bicycle, train, and bus, the movement is determined to be movement by automobile. In this manner, the automobile movement extraction unit 12 extracts only data with a movement state of "01," from line data stored according to a line data table TA2 formed mainly including items named movement state determination completion time, line identifier, identifier, movement state, starting point (point identifier), and ending point (point identifier), for example, as shown in Fig. 3B. The movement state determination completion time, which is one of the items in Fig. 3B, indicates a time when each line data was created. In the item of movement state in Fig. 3B, "01" represents a code indicative of movement by automobile, "02" a code indicative of movement by train, and "03" a code indicative of movement by foot. Then the automobile movement extraction unit 12 stores the first line data according to a first line data table TA3 formed mainly including items named movement state determination completion time, line identifier, identifier, movement state, starting point (point identifier), and ending point (point identifier), for example, as shown in Fig. 4. The movement state determination completion time, which is one of the items in Fig. 4, indicates a time when each piece of first line data was created. In the item of movement state in Fig. 4, "01" represents a code indicative of movement by automobile. The line identifier stated herein refers to an ID of each piece of first line data.

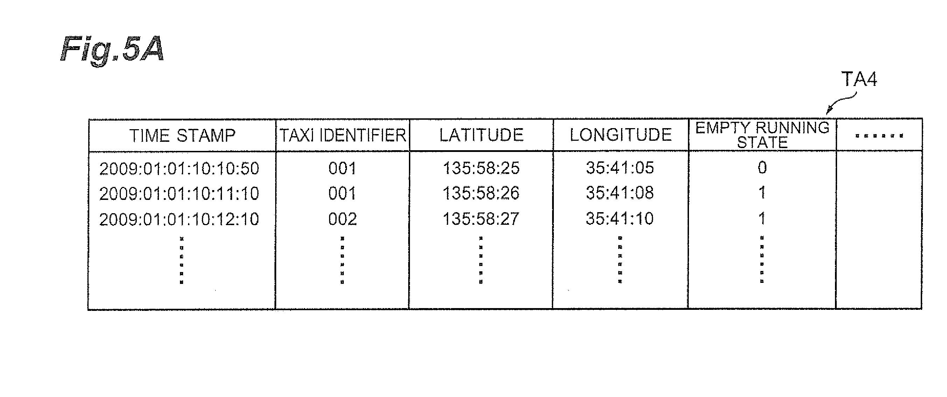

The probe information acquisition unit 13 shown in Fig. 1 is a part that acquires the probe data containing at least locations, times, and wage running states transmitted at constant intervals from taxi 30. Then the probe information acquisition unit 13 stores the probe data according to a probe data table TA4 formed mainly including items named time stamp (time), taxi identifier, latitude (location), longitude (location), and empty running state (wage running state), for example, as shown in Fig. 5A. In the item of empty running state shown in Fig. 5A, "0" indicates an empty running state and "1" a wage running state (a state in which the taxi ran with a passenger or passengers). The taxi identifier indicates an ID of each taxi.

The below will describe each of functions on taxi 30 which is an acquisition source of probe data. The taxi 30, as shown in Fig. 1, mainly has a GPS receiver 31, a taximeter 32, a controller 33, and a communication unit 34. The GPS receiver 31 acquires locations of the taxi 30. The taximeter 32 manages operation information and empty running states of the taxi. The controller 33 manages the time stamps and taxi identifier and mainly controls acquisition of probe data and transmission thereof to the taxi user extraction device 10. The communication unit 34 transmits the probe data to the taxi user extraction device 10.

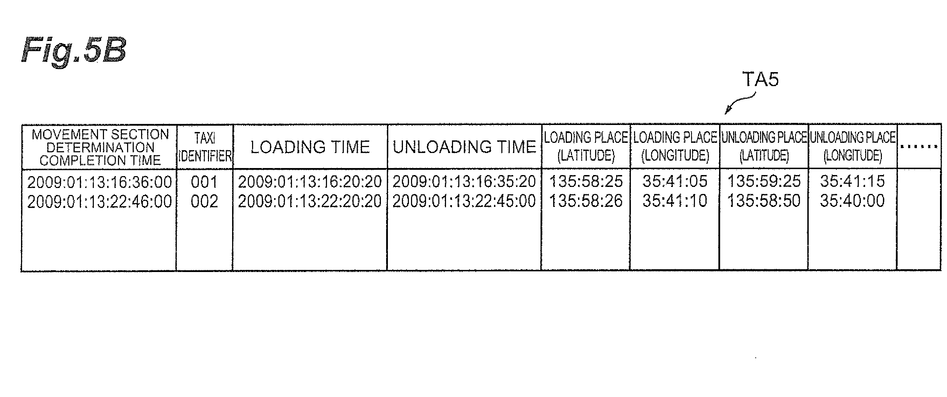

The taxi movement extraction unit 14 extracts second line data (movement locus of a taxi in a wage running state) indicative of a movement locus of a taxis in a wage running state, based on locations, times, and empty running states acquired by the probe information acquisition unit 13. Specifically, the taxi movement extraction unit 1.4 extracts the second line data with the empty running state as key, from the probe data stored according to the probe data table TA4. Then the taxi movement extraction unit 14 stores the data according to a second line data table TA5 formed mainly including items named movement section determination completion time, taxi identifier, loading time, unloading time, loading location, and unloading location, for example, as shown in Fig. 5B. The taxi identifier in Fig. 5B represents an ID of each taxi. The movement section determination completion time in Fig. 5B represents a time when each piece of second line data was created.

The taxi use extraction unit 15 compares the second line data extracted by the taxi movement extraction unit 14, with the first line data extracted by the automobile movement extraction unit 12, to extract the first line data which agrees with the second line data. For example, the taxi use extraction unit 15 determines that the second line data agrees with the first line data, if the time stamps at the starting point and ending point of the second line data and the times at the starting point and ending point in the first line data are each within a predetermined time (e.g., within one minute) and if the distance is calculated between the second line data and the first line data to be not more than a predetermined value (e.g., not more than 10 m). The times at the starting point and ending point in the first line data can be obtained from the data of the point identifiers of the starting point and ending point shown in Fig. 4 (the time stamps shown in Fig. 3A).

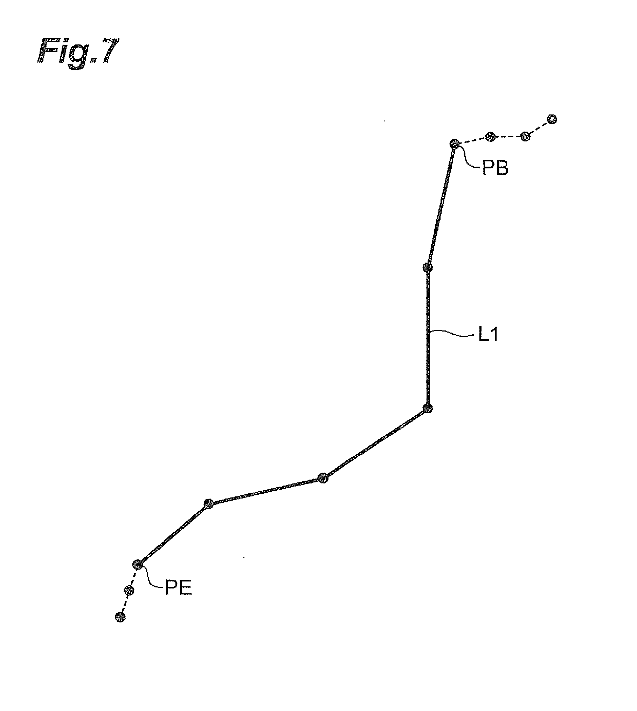

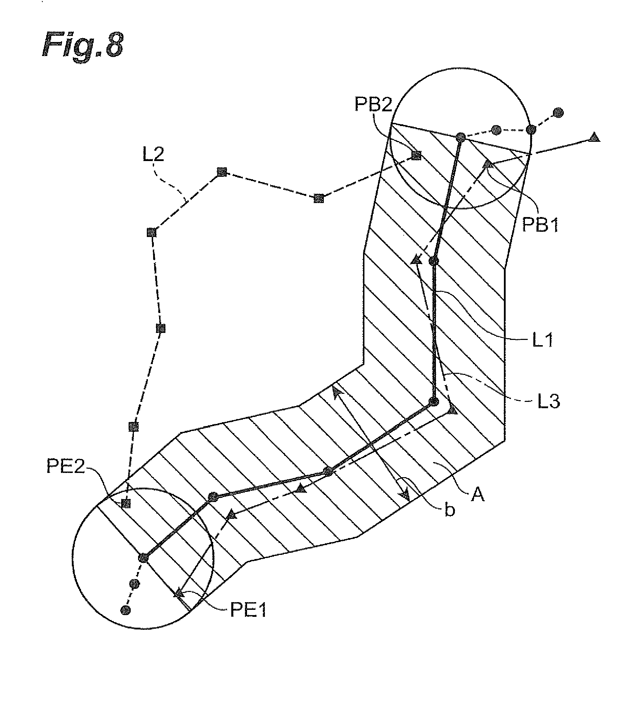

The below will describe an example of a method in which the taxi use extraction unit 15 compares the first line data with the second line data and determines that they agree with each other, using Figs. 7 and 8.

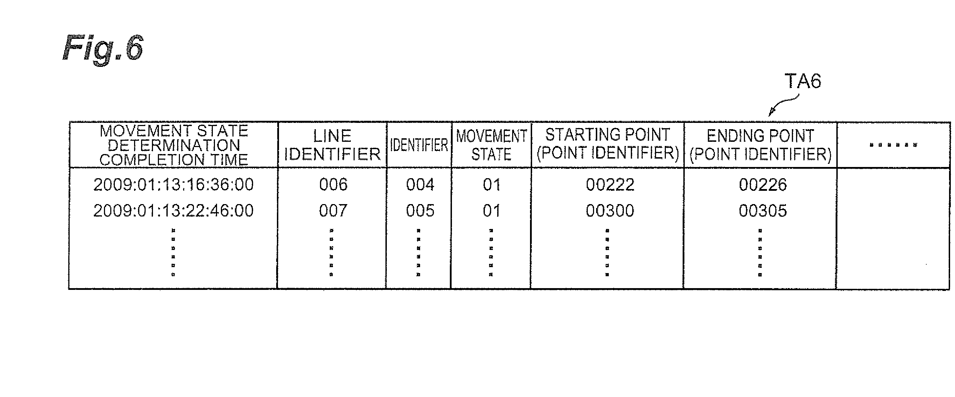

The taxi use extraction unit 15 calculates the distance between first line data and second line data and determines that the first line data is the same line as the second line data, if the distance is not more than a predetermined value. Specifically, as shown in Fig. 7, let us suppose that there is first line data L1. Next, as shown in Fig. 8, the unit extracts second line data L2, L3 having points (PB1, PB2, PE1, PE2) existing within a predetermined distance from the starting point and ending point of the first line data L1. Then the unit creates a buffer area A having the distance b with the first line data L1 at the center, as shown in Fig. 8. At this time, the second line data L3 included in the buffer area A is determined to be the same line as the first line data L1. If the time at the starting point PB of the first line data L1 (calculated from the point identifier) and the time at the starting point PB 1 of the second line data L3 (loading time) are within a predetermined time (e.g., one minute) and if the time at the ending point PE of the first line data L1 (calculated from the point identifier) and the time at the ending point PE1 of the second line data L3 (unloading time) are within a predetermined time (e.g., one minute), they are determined to be the same times. In this way, the taxi use extraction unit 15 can extract third line data indicative of a route of movement in which the user with mobile terminal 1 moved by taxi. The third line data is stored according to a third line data table TA6 formed mainly including items named movement state determination completion time, line identifier, identifier, movement state, starting point (point identifier), and ending point (point identifier), for example, as shown in Fig. 6. The point identifier stated herein refers to an ID of each piece of point data and the identifier to an ID given to each mobile terminal 1.

The taxi using user extraction unit 16 shown in Fig. 1 specifies the identifier of mobile terminal 1 having formed the third line data extracted by the taxi use extraction unit 15. Specifically, the unit extracts it with the identifier as key from the data stored in the table structure as shown in Fig. 6. This allows the unit to specify the user of the mobile terminal 1 specified from the identifier. As a result, it becomes feasible to specify users with high taxi use frequencies, by giving consideration to use frequencies (e.g., the numbers of records stored in the third line data table) or the like.

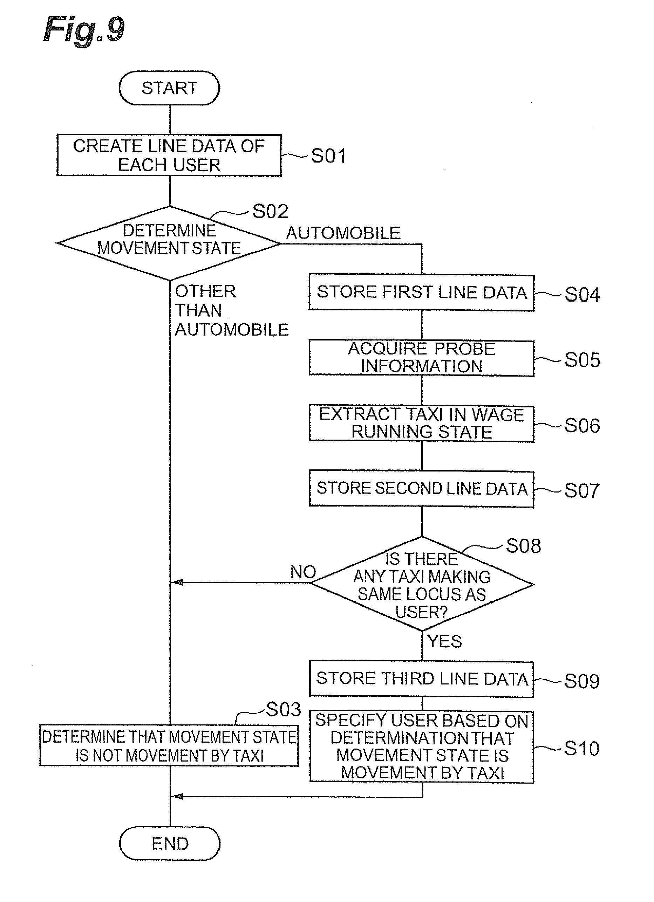

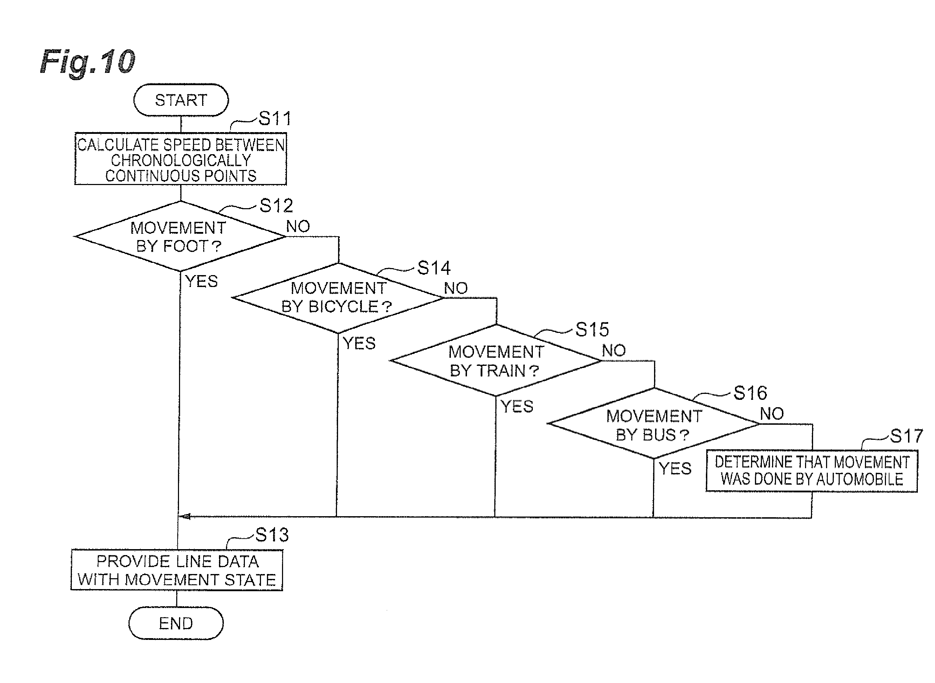

The below will describe a procedure of determining movement by taxi in the taxi user extraction device 10, using Figs 9 and 10.

First, as shown in Fig. 9, the taxi user extraction device 10 creates data indicative of a movement locus of each user (step S01). Specifically, the automobile movement extraction unit 12 creates the line data of each user, based on the point data stored according to the table as shown in Fig. 3A, which is stored in the user location information storage unit 11 and which includes the locations, times, and identifiers of mobile terminals 1. The line data is stored in the form of line data according to the line data table TA2 formed mainly including the items of movement state determination completion time, line identifier, identifier, movement state, starting point (point identifier), and ending point (point identifier), as shown in Fig. 3B. The movement state determination completion time being one of the items in Fig. 3B indicates a time when each line data was created. In the item of movement state in Fig. 3B, "01" represents the code indicative of movement by automobile, "02" the code indicative of movement by train, and "03" the code indicative of movement by foot. The line identifier stated herein refers to an ID of each piece of line data.

As shown in Fig. 9, the taxi user extraction device 10 then determines whether the movement state of the line data created in step S01 is movement by automobile (step S02). Specifically, the automobile movement extraction unit 12 executes the determination in step S02 in accordance with the flowchart shown in Fig. 10.

Namely, a speed between points continuous in chronological order is calculated about the line data created in step S01 1 (step S11).

Next, whether the movement between the points was done on foot is determined from the speed calculated in step S11 (step S12). For example, when the speed is from 3 km to 5 km per hour, the movement is determined to be movement by foot. When the movement is determined to be movement by foot, the line data is provided with an index of movement by foot (step S13). For example, in the case of movement by foot (step S12: YES), the line data is given "03" which is the code of foot in the item of movement state, as shown in Fig. 3B.

Next, as shown in Fig. 10, when it is determined in step S12 that the movement method is not one by foot (step S12: NO), it is determined whether the movement is movement by bicycle (step S14). For example, when the speed is from 5 km to 20 km per hour, the movement is determined to be movement by bicycle. When it is determined herein that the movement was done by bicycle (step S14: YES), the line data is provided with an index of movement by bicycle (step S13).

Next, when it is determined in step S14 that the movement method is not movement by bicycle (step S14: NO), it is determined whether the movement is movement by train (step S15). For example, the line data is compared with train routes and if the line data agrees with any one of them, the movement is determined to be movement by train. When it is determined herein that the movement is movement by train (step S15: YES), the line data is provided with an index of movement by train (step S13).

Next, when it is determined in step S15 that the movement method is not one by train (step S15: NO), it is determined whether the movement is movement by bus (step S16). For example, the line data is compared with bus routes and if the line data agrees with any one of them, the movement is determined to be movement by bus. When it is determined herein that the movement is movement by bus (step S16: YES), the line data is provided with an index of movement by bus (step S13).

Next, when it is determined in step S16 that the movement method is not movement by bus (step S16: NO), it is determined that the movement is movement by automobile (step S17) and the line data is provided with an index of movement by automobile (step S13).

The steps S11 to S17 above allow the device to determine the movement by automobile. When the movement is determined to be movement by any means other than automobile (step S02: other than automobile), as shown in Fig. 9, the taxi user extraction device 10 determines that the movement is not movement by taxi (step S03) and terminates the processing. On the other hand, when the movement is determined to be movement by automobile (step S02: automobile), the data (first line data) is stored according to the table as shown in Fig. 4 (step S04). The automobile movement extraction unit 12 extracts the data with the movement state of "01" from the data as shown in Fig. 3B and stores only the data with the movement state of 01 as shown in Fig. 4.

Next, as shown in Fig. 9, when the movement is determined to be movement by any means other than automobile (step S02: other than automobile), the movement is determined not to be movement by taxi (step S03) and the processing is terminated. On the other hand, when the movement is determined to be movement by automobile (step S02: automobile), the data (first line data) is stored according to the table as shown in Fig. 4 (step S04). The automobile movement extraction unit 12 extracts the data with the movement state of "01" from the data as shown in Fig. 3B and stores only the data with the movement state of "01" as shown in Fig. 4.

Next, as shown in Fig. 9, the taxi user extraction device 10 acquires the probe information (step S05). Specifically, the probe information acquisition unit 13 acquires the probe data through a wireless link or the like from the communication unit 34 in taxi 30.

Then the taxi user extraction device 10 creates the second line data indicative of a movement locus of the taxi in the wage running state, based on the probe data acquired in step S05 (step S06). Specifically, the taxi movement extraction unit 14 performs line connection with the empty running state as key for the location data stored according to the table shown in Fig. 5A, to create the second line data. Then the taxi movement extraction unit 14 stores the second line data according to the table as shown in Fig. 5B (step S07).

Next, as shown in Fig. 9, the taxi user extraction device 10 extracts the first line data agreeing with the second line data (step S08). Specifically, the taxi use extraction unit 15 performs a matching process with the time stamp and route as keys, for the first line data stored in step S04 and the second line data stored in step S07. If there is no extracted first line data agreeing with the second line data (step S08: NO), the movement is determined not to be movement by taxi (step S03). If there is any extracted first line data agreeing with the second line data (step S08: YES), the data is stored as third line data (step S09). The taxi use extraction unit 15 extracts data agreeing with the second line data, out of the first line data as shown in Fig. 4, and stores only the data as shown in Fig. 6.

Next, as shown in Fig. 9, the data stored as first line data is determined to be movement by taxi, and the identifier of mobile terminal 1 in the third line data is extracted to specify the user of the mobile terminal 1 (step S10).

By executing the steps S01 to S10 above, it becomes feasible to specify users having used a taxi, using the data stored in the user location information storage unit 11, i.e., the data transmitted from a plurality of mobile terminals 1. As a result, by giving consideration to use frequencies or the like, it becomes feasible to specify users with high taxi use frequencies.

The taxi user extraction device 10 of the present embodiment uses the point data containing the locations, times, and identifiers of mobile terminals 1 transmitted at constant intervals from a plurality of mobile terminals 1, which is stored in the user location information storage unit 11, and the probe data containing the locations, times, and empty running states transmitted at constant intervals from a plurality of taxis 30. The automobile movement extraction unit 12 creates the line data of each user and extracts the first line data indicative of movement by automobile from the line data. The taxi movement extraction unit 14 extracts the second line data, based on the probe data acquired via the probe information acquisition unit 13. The taxi use extraction unit 15 extracts data agreeing with the second line data, out of the first line data and stores the data as third line data. The taxi using user extraction unit 16 extracts the identifier of mobile terminal 1 having formed the third line data. This allows the taxi user extraction device 10 to specify each user having used a taxi.

### (Second Embodiment)

A transportation extraction system 200 including a transportation user extraction device 50 according to the second preferred embodiment of the present invention will be described using Figs. 2 and 11 to 17. In the description of the drawings, the same elements will be denoted by the same reference signs, without redundant description.

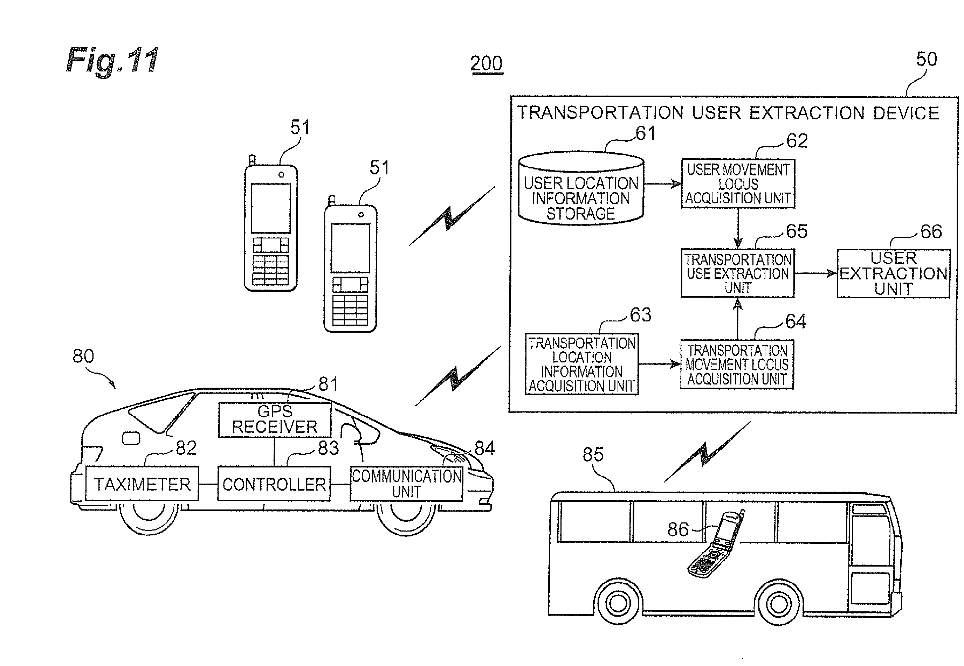

Fig. 11 is a block diagram showing a functional configuration of the transportation extraction system 200 including the transportation user extraction device 50 according to the first embodiment.

The transportation extraction system 200 is a system that extracts a user making use of transportation from users having mobile terminals 51, using user point data (user location information) mainly containing locations, times, and identifiers of mobile terminals 51 transmitted from a plurality of mobile terminals 51, and transportation point data (transportation location information) mainly containing times, locations, and presence/absence of passenger transmitted from transportation, for example, such as taxi 80 and bus 85. The mobile terminals 51 and the transportation user extraction device 50 are connected in a data communicable state through a communication network NW composed of a mobile communication network, the Internet, an intranet, and so on. The taxi 80 and the transportation user extraction device 50 are connected in a communicable state, for example, through a wireless link or the like. The "transportation" stated herein embraces every means that can carry a person, such as bus, taxi, train, airplane, ship, and helicopter.

The transportation user extraction device 50 performs extraction of transportation used by a user having mobile terminal 51, using the above-described user point data and transportation point data. The transportation user extraction device 50 is configured, as shown in Fig. 11, including a user location information storage unit (user location information storage means) 61, a user movement locus acquisition unit (user movement locus acquisition means) 62, a transportation location information acquisition unit (transportation location information acquisition means) 63, a transportation movement locus acquisition unit (transportation movement locus acquisition means) 64, a transportation use extraction unit (transportation use extraction means) 65, and a user extraction unit (user extraction means) 66.

Fig. 2 is a hardware configuration diagram of the transportation user extraction device 50. In this manner, the transportation user extraction device 50 is physically configured, as shown in the same drawing, as an information processing device including CPU 21, RAM 22 and ROM 23 as main memories, input unit 24 such as input keys and a microphone as input devices, output unit 25 such as a speaker and a display, auxiliary memory 26 such as a hard disk drive or a memory card, communication module 27 to perform transmission/reception of data with NW, and so on. The functions implemented by the transportation user extraction device 50 are realized in such a manner that predetermined programs are retrieved onto the hardware such as CPU 21 and RAM 22 shown in Fig. 2, thereby to let the communication module 27, input unit 24, and output unit 25 operate under control of the CPU 21 and data is read out from and written into the RAM 22 and the auxiliary memory 26.

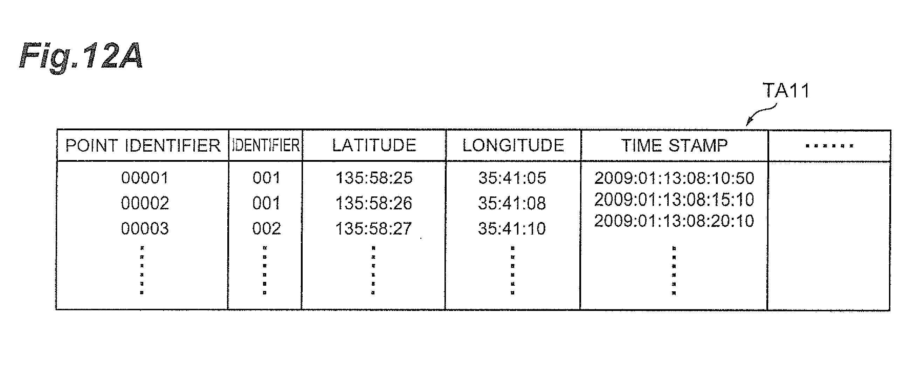

The below will describe the functions of the transportation user extraction device 50. The user location information storage unit 61 shown in Fig. 11 is a part that acquires user point data mainly containing times, locations, and identifiers of mobile terminals 51 transmitted from the mobile terminals 51. The user location information storage unit 61 always saves the user point data transmitted from a plurality of mobile terminals, for a fixed period of time. Then the user location information storage unit 61 stores the user point data according to a user point data table TA11 formed mainly including items named point identifier, identifier, latitude (location), longitude (location), and time stamp (time), for example, as shown in Fig 12A. The "point identifier" stated herein refers to an ID of each piece of user point data and the " identifier," refers to an ID given to each mobile terminal 51. It is noted that the configuration wherein the user location information storage unit 61 saves the user point data transmitted from the plurality of mobile terminals, for the fixed period of time does not have to be limited to the always-saving configuration.

Referring back to Fig. 11, the user movement locus acquisition unit 62 is a part that acquires a user movement locus as a locus of movement of a user, based on the user location information stored in the user location information storage unit 61. The user movement locus acquisition unit 62 extracts eleventh line data (user movement locus) indicative of a locus of a user from the information such as latitudes, longitudes, and time stamps stored in the user location information storage unit 61. Specifically, the user movement locus acquisition unit 62 arranges point identifiers (locations) in the user point data in chronological order for each user and connects those points by straight lines to create the eleventh line data. An occasion of creation of eleventh line data can be a time when the moving speed of a user shows a large change. The user movement speed can be obtained, for example, by calculating a moving speed between points using the time stamps, latitudes, and longitudes included in the user point data. At this time, the calculated moving speed is compared with an average moving speed in a fixed past period of the user and it is statistically determined whether there is a significant difference in change of moving speed. This enables the unit to specify a starting point and an ending point of the eleventh line data.

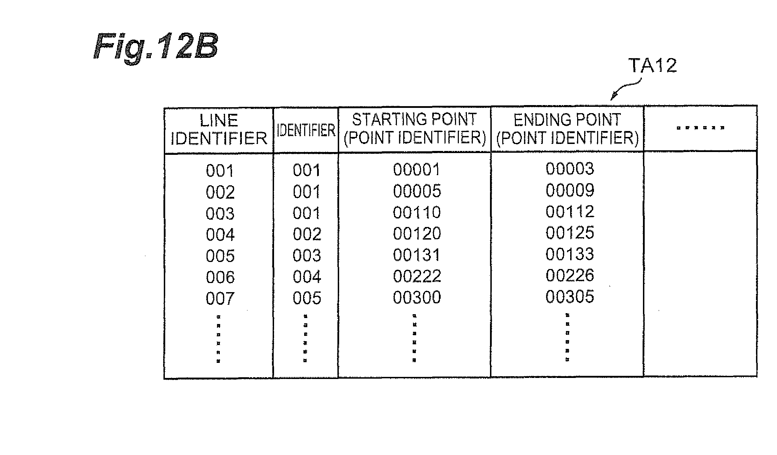

As described above, the user movement locus acquisition unit 62 acquires line data according to an eleventh line data table TA12 formed mainly including items named line identifier, identifier, starting point (point identifier), and ending point (point identifier), for example, as shown in Fig. 12B. The "line identifier" stated herein refers to an ID of each piece of eleventh line data.

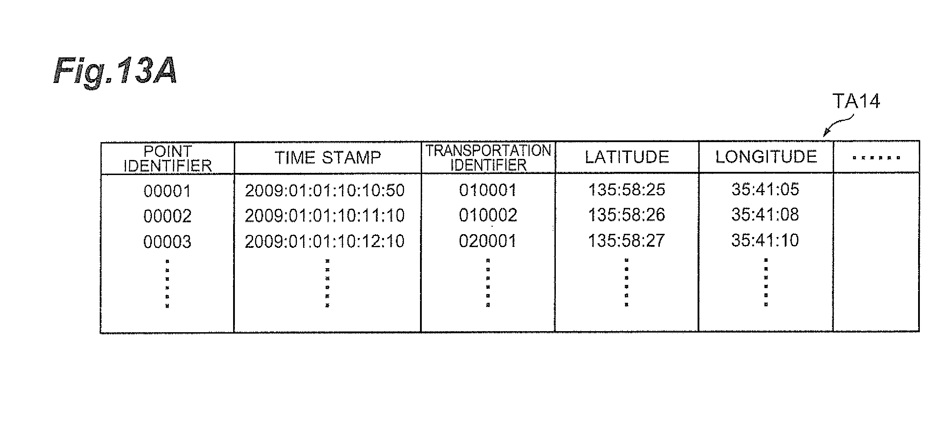

Referring back to Fig. 11, the transportation location information acquisition unit 63 is a part that acquires transportation location information containing locations, times, and identifiers of transportation transmitted from the transportation, for example, such as taxi 80 and bus 85. The unit may acquire transportation point data transmitted from transportation such as train or ship which is not shown in detail in Fig. 11. In this example, the transportation location information acquisition unit 63 stores the transportation point data according to a transportation point data table TA14 formed mainly including items named point identifier, time stamp (time), transportation identifier (identifier of transportation), latitude (location), and longitude (location), for example, as shown in Fig. 13A. The "transportation identifier" stated herein refers to an ID intrinsic to each transportation device also including information such as a type of transportation (e.g., bus or taxi). The transportation identifier in Fig. 13A shows an example in which the information of "type of transportation" and "identifier" is indicated by one field, but the information of "type of transportation" and "identifier" may be indicated by separate fields (two fields). In the example shown in Fig. 13A, the transportation identifier indicates "type of transportation" by the first two digits and the information of "identifier" by the following four digits.

The below will describe the taxi 80 being an example of an acquisition source of transportation point data. The taxi 80, as shown in Fig. 11, mainly has a GPS receiver 81, a taximeter 82, a controller 83, and a communication unit 84. The GPS receiver 81 acquires the location of taxi 80. The taximeter 82 manages the presence/absence of any passenger on the taxi. The controller 33 manages the time stamps and taxi identifier (identifier of transportation) and mainly controls acquisition of transportation point data and transmission thereof to the transportation user extraction device 50. The communication unit 34 transmits the transportation point data to the transportation user extraction device 50.

The below will describe the bus 85 being an example of an acquisition source of transportation point data. The bus 85, as shown in Fig. 11, has a mobile terminal 86 carried by a driver. The mobile terminal 86 acquires the location of bus 85 by its built-in GPS function and transmits the location, together with information such as the identifier of the bus 85 (identifier of transportation) and the presence/absence of passenger, to the transportation user extraction device 50. Since the identifier of transportation contains the information of "type of transportation" and "identifier," the device can discriminate not only a transportation means such as bus, but also a transportation device such as a specific bus.

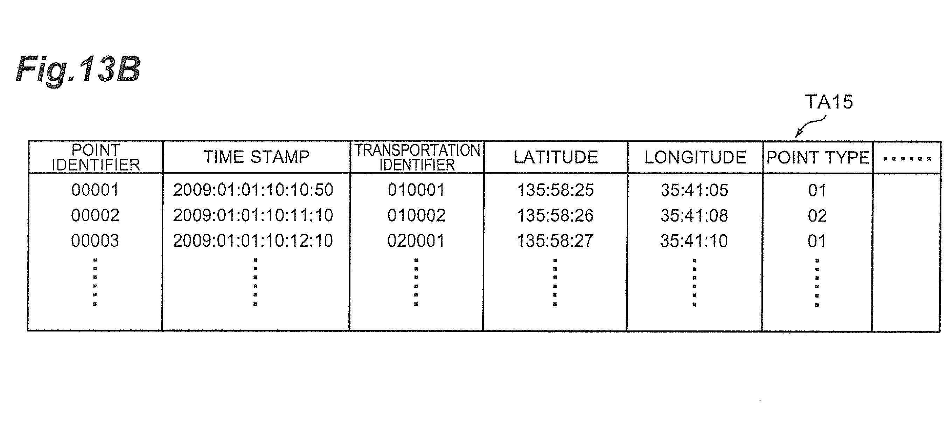

The transportation location information acquisition unit 63 provides a point type as information to specify a starting point or an ending point for the below-described transportation movement locus acquisition unit 64 to create twelfth line data. The point type is indicated, for example, by code "01" indicative of a starting point, code "02" indicative of an ending point, code "03" indicative of a point not corresponding to either of a starting point and an ending point, and so on. The point type can be set as follows, for example, in the case of transportation with a fixed route such as a train or a bus: from information such as a timetable, the location and time of departure are set as location and time of the starting point and the location and time of arrival are set as location and time of the ending point. In the case of transportation with no fixed route, for example, such as a taxi, the point type can be set based on the information of presence/absence of passenger or the like. For example, a location and a time of loading can be set as location and time of the starting point and a location and a time of unloading as location and time of the ending point. The transportation location information acquisition unit 63 stores processed transportation point data according to a processed transportation point data table TA15 formed mainly including items named point identifier, time stamp (time), transportation identifier (identifier of transportation), latitude (location), longitude (location), and point type, for example, as shown in Fig. 13B.

The transportation movement locus acquisition unit 64 is a part that acquires a transportation movement locus as a locus of movement of transportation, based on the processed transportation location information acquired by the transportation location information acquisition unit 63. The transportation movement locus acquisition unit 64 extracts twelfth line data (transportation movement locus) indicative of a locus of transportation from the information such as latitudes, longitudes, time stamps, and point types acquired by the transportation location information acquisition unit 63. Specifically, the transportation movement locus acquisition unit 64 arranges point identifiers (locations) included in the processed transportation point data, in chronological order for each transportation identifier and connects those points by straight lines to create the twelfth line data. On this occasion, the transportation movement locus acquisition unit 64 may be configured to extract point identifiers with the point type of starting point and point identifiers with the point type of ending point and to extract processed transportation point data with the same identifiers as the thus extracted point identifiers, having times between the time when the point identifier of the starting point was acquired and the time when the point identifier of the ending point was acquired, followed by line connection.

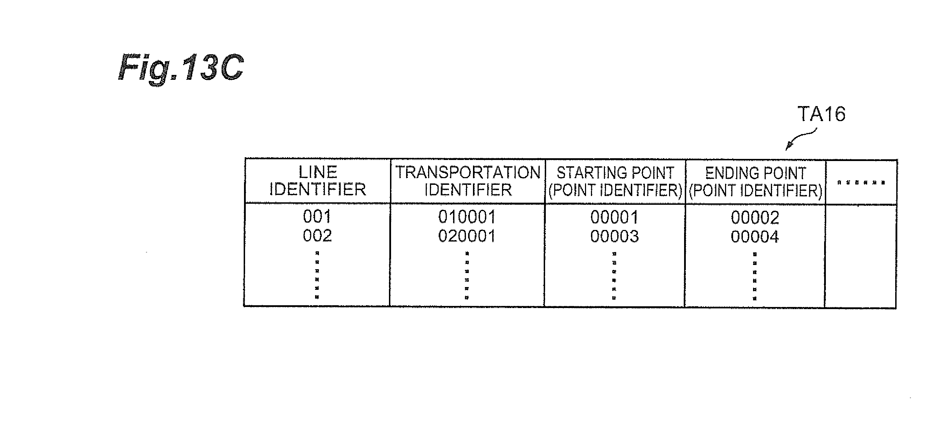

In this manner, the transportation movement locus acquisition unit 64 acquires the twelfth line data according to a twelfth line data table TA16 formed mainly including items named line identifier, transportation identifier, starting point (point identifier), and ending point (point identifier), for example, as shown in Fig. 13C. The "line identifier," which is one of the items in the twelfth line data table TA16, refers to an ID of each piece of twelfth line data.

Referring back to Fig. 11, the transportation use extraction unit 65 is a part that compares the user movement loci acquired by the user movement locus acquisition unit 62, with the transportation movement locus acquired by the transportation movement locus acquisition unit 64 and extracts a user movement locus agreeing with the transportation movement locus. In this example, the transportation use extraction unit 65 compares the eleventh line data extracted by the user movement locus acquisition unit 62, with the twelfth line data extracted by the transportation movement locus acquisition unit 64 and extracts the eleventh line data agreeing with the twelfth line data. For example, the transportation use extraction unit 65 determines that the twelfth line data agrees with a piece of eleventh line data if the time stamps at the starting point and ending point of the twelfth line data and the times at the starting point and ending point of the eleventh line data are within a predetermined time (e.g., within five minutes) and if the distance is calculated between the twelfth line data and the eleventh line data to be not more than a predetermined value (e.g., not more than 100 m). In the present embodiment, the description was given using the example of extracting the eleventh line data agreeing with the twelfth line data, but the present invention is not limited to this example; it is also possible to extract the twelfth line data agreeing with the eleventh line data.

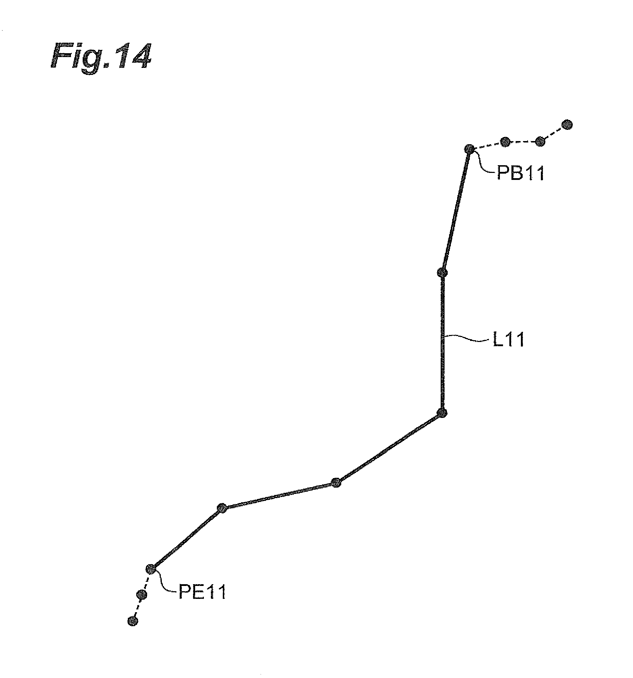

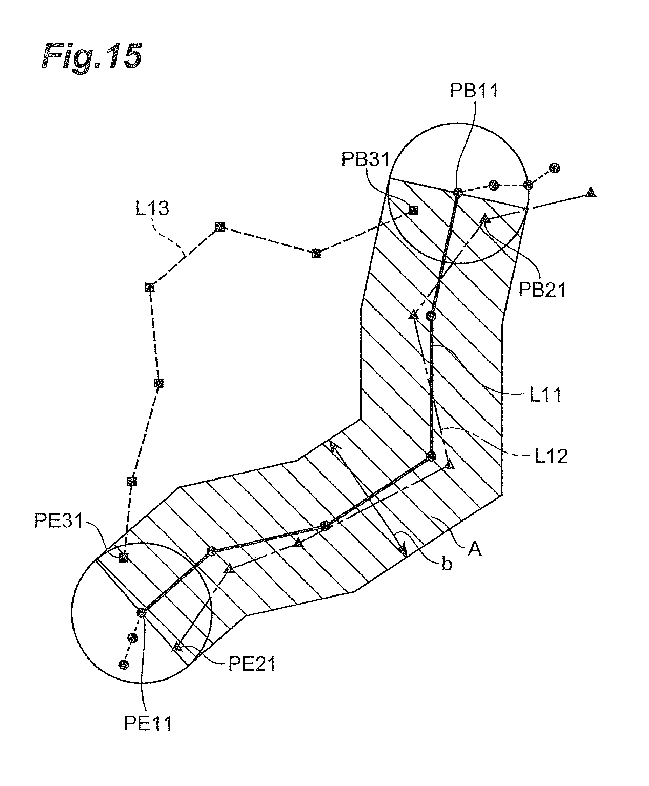

The below will describe an example of a method in which the transportation use extraction unit 65 extracts a piece of eleventh line data agreeing with the twelfth line data L11 as shown in Fig. 14, using Figs. 14 and 15. Figs. 14 and 15 are drawings to illustrate agreement of loci.

First, the transportation use extraction unit 65 extracts the eleventh line data with the starting point and ending point within a predetermined distance from locations of the starting point PB11 and ending point PE11 of the twelfth line data L11 (e.g., 100 m or less: within circles centered on PB11 and PE11 in Fig. 15), as shown in Fig. 15. Let us suppose that pieces of eleventh line data L12, 13 are extracted.

Next, the transportation use extraction unit 65 determines whether the respective times of the starting point PB21 and ending point PE21 of the eleventh line data L12 extracted are coincident with the respective times of the starting point PB11 and ending point PE11 of the twelfth line data L11 (e.g., it is determined that they coincide with each other, if the difference is within five minutes). Likewise, the transportation use extraction unit 65 determines whether the respective times of the starting point PB31 and ending point PE31 of the eleventh line data L13 extracted are coincident with the respective times of the starting point PB 11 and ending point PE 11 of the twelfth line data L11 (e.g., it is determined that they coincide with each other, if the difference is within five minutes). It is assumed herein that the respective times of the starting points PB21, 31 and the ending points PE21, 31 of the both pieces of eleventh line data L12, 13 agree with the respective times of the starting point PB11 and ending point PE11 of the twelfth line data L11.

Next, the transportation use extraction unit 65 sets a buffer area A with a predetermined width (e.g., 100 m) for the twelfth line data L11 as shown in Fig. 15. Then the transportation use extraction unit 65 determines that a piece of eleventh line data agrees with the twelfth line data, if the extracted eleventh line data L12, 13 falls within the buffer area A with more than a certain probability (e.g., 90%). In the example shown in Fig. 15, the eleventh line data L12 is determined to agree with the twelfth line data L 11.

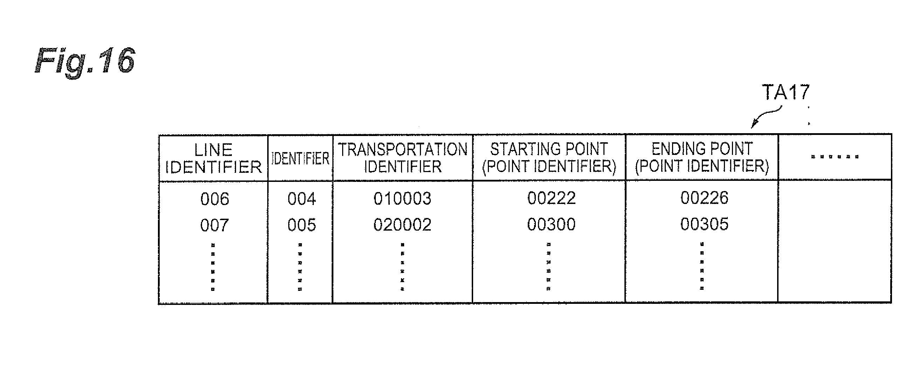

In this manner, the transportation use extraction unit 65 can extract the thirteenth line data indicative of a route of movement in which the user with the mobile terminal 51 moved by means of a specific transportation device. The thirteenth line data is stored according to a thirteenth line data table TA17 formed mainly including items named line identifier, identifier, transportation identifier (identifier of transportation), starting point (point identifier), and ending point (point identifier), for example, as shown in Fig. 16. The "point identifier" stated herein refers to an ID of each piece of point data, the "identifier" to an ID given to each mobile terminal 51, and the "transportation identifier" to an ID given to each transportation device. The transportation use extraction unit 65 may save the aforementioned thirteenth line data as a user transportation use history.

Referring back to Fig. 11, the user extraction unit 66 is a part that extracts the identifier of mobile terminal 51 having formed the user movement locus extracted by the transportation use extraction unit 65. In this example, the user extraction unit 66 specifies the identifier of the mobile terminal 51 having formed the thirteenth line data extracted by the transportation use extraction unit 65. This allows the device to specify a user making use of each transportation device. By giving consideration to use frequencies (e.g., the numbers of records stored in the thirteenth line data table) or the like, it also becomes feasible to specify users with high use frequencies for each transportation.

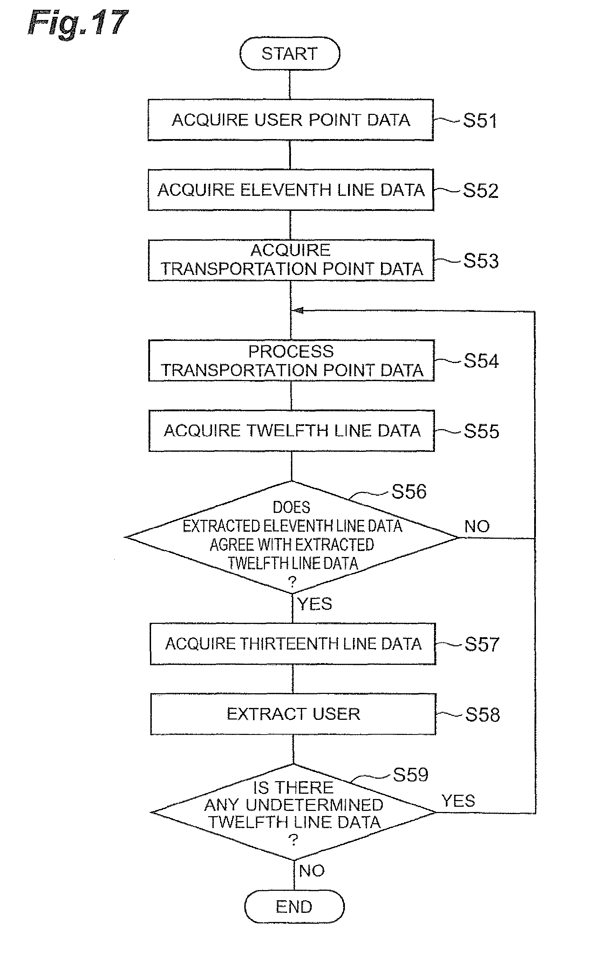

The below will describe a method of specifying a user making use of a specific transportation device (transportation user extraction method) in the transportation user extraction device 50, using Fig. 17. Fig. 17 is a flowchart showing the operation in the transportation user extraction device.

First, as shown in Fig. 17, the transportation user extraction device 50 stores the user location information containing locations, times, and identifiers of mobile terminals, transmitted from the mobile terminals 51 (step S51). Specifically, the user location information storage unit 61 stores the user point data according to the user point data table TA11 as shown in Fig. 12A, including the items of point identifier, identifier, latitude, longitude, and time stamp.

Referring back to Fig. 17, the transportation user extraction device 50 then acquires a user movement locus as a locus of movement of a user, based on the user location information stored in the user location information storage unit 61 (step S52). Specifically, the user movement locus acquisition unit 62 arranges point data stored according to the table as shown in Fig. 12A, which is stored in the user location information storage unit 61, in chronological order for each user and connects the point data to create eleventh line data. The eleventh line data is stored according to the eleventh line data table TA12 formed mainly including the items of line identifier, identifier, starting point (point identifier), and ending point (point identifier) as shown in Fig. 12B. In the present embodiment, the eleventh line data is formed by defining a point demonstrating a significant change in moving speed of the user, as a starting point or an ending point. For example, a point demonstrating a significant change in moving speed is extracted based on the time stamps in the user point data and the extracted point is defined as a starting point or an ending point of the eleventh line data.

Referring back to Fig. 17, the transportation user extraction device 50 then acquires the transportation location information containing the locations, times, and identifier of transportation transmitted from the transportation such as taxi 80 or bus 85 (step S53). Specifically, first, the transportation location information acquisition unit 63 acquires the transportation point data through a wireless link from the communication unit 84 in taxi 80 or acquires the transportation point data through the communication network NW from the mobile terminal 86 carried by a driver of bus 85. At this time, the transportation location information acquisition unit 63 acquires the transportation point data according to the transportation point data table TA14 formed mainly including the items of point identifier, time stamp, transportation identifier, latitude, and longitude, for example, as shown in Fig. 13A.

In the present embodiment, the transportation point data is provided with a point type to specify a starting point or an ending point on the occasion of creating the twelfth line data in a below-described step (step S54). Examples of point types include a starting point, an ending point, a point different from the starting point and ending point, and so on. The point type is given as follows, for example, in the case of transportation with a fixed route such as a train or a bus: from information such as a timetable, information indicative of a starting point is given based on a location and a time of departure, and information indicative of an ending point is given based on a location and a time of arrival. For example, in the case of transportation with no fixed route such as a taxi, information indicative of a starting point is given based on a location and a time of loading and information indicative of an ending point is given based on a location and a time of unloading. The transportation point data provided with the typed point as described above is stored in a memory or the like in accordance with the processed transportation point data table TA15 formed mainly including the items of point identifier, time stamp (time), transportation identifier (identifier of transportation), latitude (location), longitude (location), and point type, for example, as shown in Fig. 13B.

Referring back to Fig. 17, the transportation user extraction device 50 then creates information indicative of a movement locus of transportation, for example, such as taxi 80 or bus 85, based on the processed transportation location information acquired by the transportation location information acquisition unit 63 (step S55). Specifically, the transportation movement locus acquisition unit 64 arranges the point data stored according to the table as shown in Fig. 13B, which was acquired by the transportation location information acquisition unit 63 and provided with the point type, in chronological order for each transportation identifier and connects the point data to create the twelfth line data. The twelfth line data is stored according to the twelfth line data table TA16 formed mainly including the items of line identifier, transportation identifier, starting point (point identifier), and ending point (point identifier) as shown in Fig. 13C.

Next, as shown in Fig. 17, the transportation user extraction device 50 compares the user movement loci acquired by the user movement locus acquisition unit 62, with the transportation movement locus acquired by the transportation movement locus acquisition unit 64 and extracts a user movement locus agreeing with the transportation movement locus (step S56). In this example, the transportation use extraction unit 65 extracts a piece of eleventh line data agreeing with the movement locus indicated by the twelfth line data. Specifically, the transportation use extraction unit 65 determines that a piece of eleventh line data agrees with the twelfth line data, if the time stamps at the starting point and ending point of the twelfth line data and the times at the starting point and ending point of the eleventh line data are each within a predetermined time (e.g., within five minutes) and if the eleventh line data is included in the buffer area A with the predetermined width (e.g., 100 m) from the twelfth line data with more than a certain probability (e.g., 90%). When the movement locus indicated by the eleventh line data as a target of determination for agreement with the twelfth line data does not agree with the movement locus indicated by the twelfth line data (step S56: NO), the same determination process is carried out for another piece of eleventh line data (step S56).

On the other hand, when the eleventh line data agreeing with the twelfth line data is extracted (step S56: YES), the data is stored as thirteenth line data (step S57). The thirteenth line data is stored according to the thirteenth line data table TA17 formed mainly including the items of line identifier, identifier, transportation identifier, starting point (point identifier), and ending point (point identifier), for example, as shown in Fig. 16.

Referring back to Fig. 17, the transportation user extraction device 50 then extracts the identifier of the mobile terminal 51 having formed the user movement extracted by the transportation use extraction unit 65 (step S58). Specifically, the user extraction unit 66 extracts the identifier of mobile terminal 51 included in the thirteenth line data as shown in Fig. 16, and specify the user of the mobile terminal 51. This allows the transportation user extraction device 50 to specify the user making use of each transportation.

Next, the transportation user extraction device 50 determines whether there is any piece of twelfth line data not determined about agreement with the eleventh line data (step S59). If there is a piece of twelfth line data not determined about agreement with the eleventh line data (step S59: YES), the device returns to step S56 to execute the same determination process as above for the undetermined twelfth line data. On the other hand, if there is no piece of twelfth line data not determined about agreement with the eleventh line data (step S59: NO), the sequential processing is terminated.

In the transportation user extraction device 50 as described above, the eleventh line data is acquired based on the user point data stored in the user location information storage unit 61 and the twelfth line data is acquired based on the transportation point data transmitted from each of transportation devices such as taxi 80 and bus 85. Then the eleventh line data agreeing with the twelfth line data is extracted and the identifier of the mobile terminal 51 included in the extracted eleventh line data is extracted. This allows the movement locus by the user to be associated with the movement locus by each transportation device, for example, such as taxi 80 or bus 85 and thus it becomes feasible to extract the user making use of specific transportation. The transportation point data transmitted from the transportation is transmitted from a positioning system mounted on the transportation, the mobile terminal carried by the driver of the transportation or the like, and so on.

### (Modification Examples of Second Embodiment)

The present invention was described above in detail on the basis of the second embodiment. It is, however, noted that the present invention is by no means limited to the above embodiment. The present invention can be modified in many ways as described below without departing from the scope and spirit of the invention.

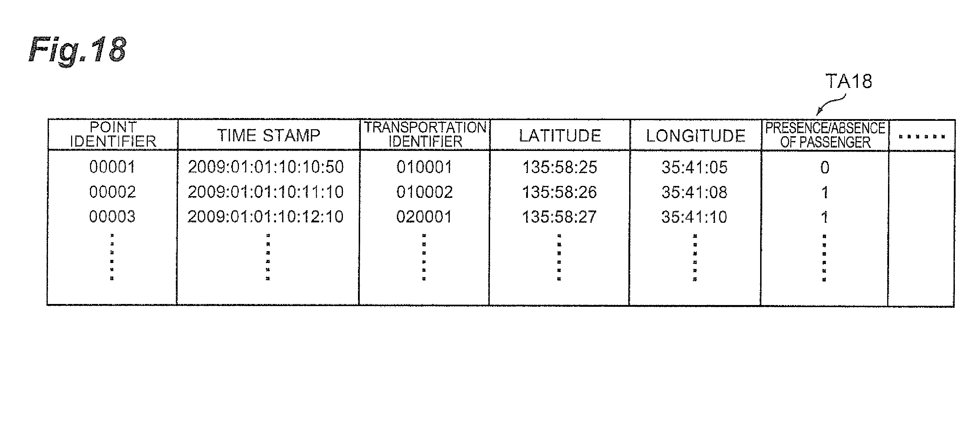

In the transportation user extraction device 50 of the second embodiment, the transportation location information acquisition unit 63 was described using the example in which the transportation point data was acquired according to the transportation point data table TA14 formed mainly including the items of point identifier, time stamp, transportation identifier, latitude, and longitude as shown in Fig. 13A, but, without having to be limited to this example, the data may contain the presence/absence of passenger (information about the presence/absence of passenger), for example, like a transportation point data table TA18 shown in Fig. 18. In the item of presence/absence of passenger shown in Fig. 18, "0" represents the absence of passenger and "1" the presence of passenger.

The transportation movement locus acquisition unit 64 can determine whether extraction of the twelfth line data (movement locus data) is to be executed, based on this information about the presence/absence of passenger. Specifically, the transportation movement locus acquisition unit 64 acquires the twelfth line data with the information "1" about the presence/absence of passenger as key, from the transportation point data stored according to the transportation point data table TA18. This allows the device to omit a process of creating the twelfth line data (transportation movement locus), for example, for a bus in an empty running state, which does not have to be associated with the twelfth line data (user movement locus). As a consequence, the load is reduced on the processing device to execute the process of creating the twelfth line data, whereby the speed of other necessary processing can be increased.

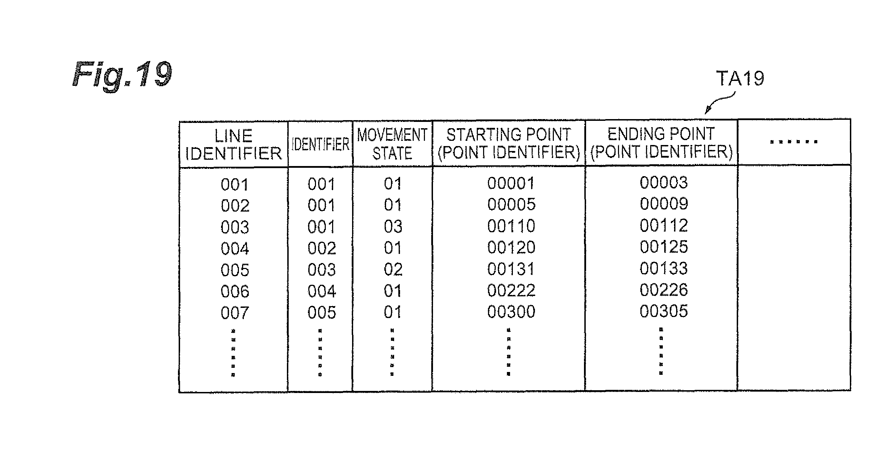

In the transportation user extraction device 50 of the second embodiment, the user movement locus acquisition unit 62 was described using the example in which the eleventh line data was acquired according to the eleventh line data table TA12 formed mainly including the items of line identifier, identifier, starting point (point identifier), and ending point (point identifier) as shown in Fig. 12B, but, without having to be limited to this, the data may contain information about the movement state, for example, like an eleventh line data table TA19 shown in Fig. 19.

Specifically, on the occasion of creating the eleventh line data, the user movement locus acquisition unit 62 calculates a speed between points from the time stamps, latitudes, and longitudes included in the user point data and estimates a movement method, for example, bicycle, train, bus, automobile, or other means which the user used, based on the speed. Then the line data is acquired according to the eleventh line data table TA19 formed mainly including the items of line identifier, identifier, movement state, starting point (point identifier), and ending point (point identifier), for example, as shown in Fig. 19. The movement state may be provided as a code "01" indicative of movement by automobile, a code indicative of movement by train, or a code "03" indicative of movement by foot.

Since this allows the transportation device used by the user to be preliminarily estimated based on the speed, the load can be reduced on the processing for extraction of the eleventh line data agreeing with the twelfth line data, for example, in the aforementioned step S56. For example, for the eleventh line data estimated as movement by means of bus, only data corresponding to the transportation identification code of "bus" may be extracted as target from all the twelfth line data. This can significantly reduce the load on the processing device, when compared to the case where agreement is judged for targets of all transportation devices. The aforementioned "transportation identification code" means information of "type of transportation" included in the transportation identifier.

In the transportation user extraction device 50 of the second embodiment, the transportation location information acquisition unit 63 was described using the example in which the unit acquired the transportation location information containing the locations, times, and identifier of transportation transmitted from the transportation, for example, such as taxi 80 or bus 85, but it does not have to be limited to this example. For example, the location information about transportation does not have to be acquired from the various means mounted on the transportation devices, but it is also possible to adopt a configuration wherein predetermined information, for example, like timetables is stored in a database and the location information is acquired from the database.

The transportation user extraction device 50 of the second embodiment was described using the example in which the pieces of eleventh line data and twelfth line data were preliminarily created prior to extraction of the eleventh line data agreeing with the twelfth line data, but the device does not always have to be limited to this example. For example, the device may be configured as follows: after the creation of the eleventh line data and before the creation of the twelfth line data, the processed transportation point data agreeing with the starting point and ending point of the eleventh line data is extracted and the twelfth line data is created based on the point data of these starting point and ending point. It is also possible to adopt, for example, a configuration opposite to the above configuration, in which after the creation of the twelfth line data and before the creation of the eleventh line data, the user point data agreeing with the starting point and ending point of the twelfth line data is extracted and the eleventh line data is created based on the point data of these starting point and ending point. As for the steps (step S51 to step S55) before the determination on the eleventh line data agreeing with the twelfth line data, the order thereof is optional in the present invention.

### Industrial Applicability

An aspect of the present invention can provide the taxi user extraction device and taxi user extraction method capable of extracting a user making use of a taxi, using the mobile terminals carried by users.

Another aspect of the present invention can provide the transportation user extraction device and transportation user extraction method capable of extracting a user making use of a specific transportation device, using the information transmitted from the mobile terminals carried by users.

### List of Reference Signs

1, 51 mobile terminals; 10 taxi user extraction device; 11 user location information storage unit; 12 automobile movement extraction unit; 13 probe information acquisition unit; 14 taxi movement extraction unit; 15 taxi use extraction unit; 16 taxi using user extraction unit; 30, 80 taxi; 31,81 GPS receiver; 32, 82 taximeter; 33, 83 controller; 34, 84 communication unit; 50 transportation user extraction device; 61 user location information storage unit; 62 user movement locus acquisition unit; 63 transportation location information acquisition unit; 64 transportation movement locus acquisition unit; 65 transportation use extraction unit; 66 user extraction unit; 86 mobile terminal; 85 bus; 100 taxi user extraction system; 200 transportation extraction system; NW communication network; L1, L2, L3, L11, L12 line data; PB, PB1, PB2, PB11 starting points; PE, PE1, PE2, PE11 ending points; TA1 point data table; TA2 line data table; TA3 first line data table; TA4 probe data table; TA5 second line data table; TA6 third line data table; TA11 user point data table; TA12 eleventh line data table; TA14 transportation point data table; TA15 processed transportation point data table; TA16 twelfth line data table; TA17 thirteenth line data table; TA18 transportation point data table; TA19 eleventh line data table.

## Claims

1. A taxi user extraction device for extracting a user making use of a taxi, using information transmitted from a plurality of mobile terminals, comprising:
user location information storage means which stores user location information containing location, time, and identifier of the mobile terminal transmitted from the mobile terminal;
automobile movement extraction means which extracts locus of movement in which the user moved by automobile, based on moving speeds calculated from the location and time stored in the user location information storage means;
probe information acquisition means which acquires probe information containing location, time, and empty running states transmitted from the taxi;
taxi movement extraction means which extracts a locus of the taxi in which the taxi moved in a wage running state, based on the probe information acquired by the probe information acquisition means;
taxi use extraction means which compares the movement locus of the taxis in the wage running state extracted by the taxi movement extraction means, with the automobile movement locus extracted by the automobile movement extraction means and extracts the automobile movement locus agreeing with the taxi movement locus in the wage running state; and
taxi using user extraction means which extracts identifier of the mobile terminal having formed taxi use locus extracted by the taxi use extraction means.

2. The taxi user extraction device according to claim 1, wherein the taxi use extraction means determines that the automobile movement locus agrees with the taxi movement locus in the wage running state, if the times at a starting point and an ending point of the taxi movement locus in the wage running state and the times at a starting point and an ending point of the automobile movement locus are each in a predetermined time and if a distance is calculated between the taxi movement locus in the wage running state and the automobile movement locus to be not more than a predetermined value.

3. A taxi user extraction method for extracting a user making use of a taxi, using information transmitted from a plurality of mobile terminals, comprising:
a user location information storage step of storing user location information containing location, time, and identifier of the mobile terminal transmitted from the mobile terminal;
an automobile movement extraction step of extracting locus of movement by automobile, based on moving speeds calculated from the location and time stored in the user location information storage step;
a probe information acquisition step of acquiring probe information containing location, time, and empty running states transmitted from the taxi;
a taxi movement extraction step of extracting a locus of the taxi in which the taxi moved in a wage running state, based on the probe information acquired in the probe information acquisition step;
a taxi use extraction step of comparing the movement locus of the taxis in the wage running state extracted in the taxi movement extraction step, with the automobile movement locus extracted in the automobile movement extraction step and extracting the automobile movement locus agreeing with the taxi movement locus in the wage running state; and
a taxi using user extraction step of extracting identifier of the mobile terminal having formed taxi use locus extracted in the taxi use extraction step.

4. A transportation user extraction device for extracting a user making use of a specific transportation device, using information transmitted from a plurality of mobile terminals, comprising:
user location information storage means which stores user location information containing location, time, and identifier of the mobile terminal transmitted from the mobile terminal;
user movement locus acquisition means which acquires user movement locus as locus of movement of the user, based on the user location information stored in the user location information storage means;
transportation location information acquisition means which acquires transportation location information containing location, time, and an identifier of the transportation device transmitted from the transportation device;
transportation movement locus acquisition means which acquires a transportation movement locus as a locus of movement of the transportation device, based on the transportation location information acquired by the transportation location information acquisition means;
transportation use extraction means which compares the user movement locus acquired by the user movement locus acquisition means, with the transportation movement locus acquired by the transportation movement locus acquisition means and extracts the user movement locus agreeing with the transportation movement locus; and
user extraction means which extracts identifier of the mobile terminal having formed the user movement locus extracted by the transportation use extraction means.

5. The transportation user extraction device according to claim 4, wherein the user movement locus acquisition means specifies the transportation device used by the user, based on a moving speed calculated from the location and the time stored in the user location information storing means.

6. The transportation user extraction device according to claim 4 or 5, wherein the transportation location information acquisition means further acquires information about presence/absence of passenger on the transportation device as the transportation location information, and
wherein the transportation movement locus acquisition means acquires only the transportation movement locus of the transportation device with the information about the presence/absence of passenger corresponding to the presence.

7. The transportation user extraction device according to any one of claims 4 to 6, wherein the transportation use extraction means determines that the user movement locus agrees with the transportation movement locus, if the times at a starting point and an ending point of the user movement locus and the times at a starting point and an ending point of the transportation movement locus are each within a predetermined time and if a distance is calculated between the user movement locus and the transportation movement locus to be not more than a predetermined value.

8. A transportation user extraction method for extracting a user making use of a specific transportation device, using information transmitted from a plurality of mobile terminals, comprising:
a user location information storage step of storing user location information containing location, time, and identifier of the mobile terminal transmitted from the mobile terminal;
a user movement locus acquisition step of acquiring user movement locus as locus of movement of the user, based on the user location information stored in the user location information storage step;
a transportation location information acquisition step of acquiring transportation location information containing location, time, and an identifier of the transportation device transmitted from the transportation device;
a transportation movement locus acquisition step of acquiring a transportation movement locus as a locus of movement of the transportation device, based on the transportation location information acquired in the transportation location information acquisition step;
a transportation use extraction step of comparing the user movement locus acquired in the user movement locus acquisition step, with the transportation movement locus acquired in the transportation movement locus acquisition step and extracting the user movement locus agreeing with the transportation movement locus; and
a user extraction step of extracting identifier of the mobile terminal having formed the user movement locus extracted in the transportation use extraction step.
